# EUROPEAN PATENT SPECIFICATION

(11) **EP 2 719 933 B1**
(45) Date of publication and mention of the grant of the patent: **26.06.2019**
(21) Application number: 13186834.1
(22) Date of filing: 01.10.2013
(51) Int. Cl.: F16L 3/10

(54) **Fixing collar for pipes, tanks and bodies with cylindrical portions in general**
Befestigungsmanschette für Leitungen, Tanks und Körper mit zylinderförmigen Abschnitten im Allgemeinen
Collier de fixation pour tuyaux, réservoirs et corps avec des parties cylindriques en général

(30) Priority: 12.10.2012 IT PD20120298
(43) Date of publication of application: 16.04.2014
(73) Proprietor: Dab Pumps S.p.A., 35035 Mestrino (Padova) (IT)
(72) Inventor: Tazioli, Stefano, 57016 Rosignano Marittimo, Località Gabbro LI (IT); Sinico, Francesco, 36075 Montecchio Maggiore VI (IT)
(74) Representative: Modiano, Micaela Nadia

(56) References cited:
- WO-A1-2009/122119
- US-A- 3 913 187

## Description

The present invention relates to a fixing collar for pipes, tanks and bodies with cylindrical portions in general.

Collars for fixing, especially but not exclusively, pipes in civil systems are known, which are composed mainly of two arc-like bands, each provided with two wings at their ends. The two bands are fitted symmetrically on a pipe and are joined on the diametrical plane at the two pairs of wings.

Although these collars are currently in widespread use, they suffer some significant drawbacks.

They can be used used only if the diametrical dimension of the pipe corresponds to theirs and therefore do not allow any dimensional tolerances with respect to design data.

Moreover, during assembly, the two bands must be positioned and held still manually on the pipe during the tightening of the bolts that pass through adapted holes thereof at the wings. Such collars, therefore, suffer the drawback of reduced stability during the assembly operations, which although not complicated are scarcely practical, requiring some care and slowing the work of operators.

If the use of such collars is required in order to fix particular components of a device, for example a hydraulic device, such as parts of ducts, tanks, cylindrical bodies or in general bodies provided with cylindrical portions, the presence of the two lateral wings can cause space occupation problems in the device.

An example is a tank to be fixed in a pumping device, in which the current trend leads to minimize space occupation during design.

US 3 913 187 A discloses a squeeze-action clamp which is molded from thermoplastic synthetic resin as two semicircular halves resiliently hinged together at one end and having joint portions at each of the other ends thereof. The inner surfaces of the halves have thereon a plurality of resilient auxiliary supporting members for resiliently hugging an object at the inside of an annulus completed by engaging the joint portions.

The aim of the present invention is to provide a collar that allows to speed up the operations for fixing components having cylindrical portions or pipes and is capable of adapting to the dimensions of the element to be fixed, compensating any dimensional tolerances thereof.

Within this aim, an object of the invention is to provide a fixing collar that has a reduced space occupation with respect to known collars currently in use.

Another object of the invention is to provide a fixing collar that can be closed on the element to be fixed without the need to use bolts or other mechanical connection means.

Another object of the invention is to devise a collar that is easy to use and can be manufactured with known technologies.

In accordance with the invention, there is provided a fixing collar for pipes, tanks and bodies with cylindrical portions in general, as defined in the appended claims.

Further characteristics and advantages of the invention will become better apparent from the description of a preferred but not exclusive embodiment of the collar according to the invention, illustrated by way of nonlimiting example in the accompanying drawings, wherein:
Figure 1 is a perspective view of the collar according to the invention, in the closed condition;
Figure 2 is a sectional view of the collar according to the invention;
Figure 3 is another perspective view of the collar according to the invention, in the open condition;
Figure 4 is a perspective view of the collar according to the invention, in the open and inverted condition;
Figure 5 is an enlarged-scale view of a detail of the collar according to the invention.

With reference to the figures, the collar according to the invention, generally designated by the reference numeral 10, is of the type of a band that wraps around an element to be fixed 11 to a supporting structure by way of adapted fixing means 12.

The collar 10 is conveniently made of plastic material, with some elastically deformable parts, and in one piece as described in greater detail hereinafter.

The element to be fixed 11, shown here by way of example as a substantially cylindrical tank, can have any other shape, so long as it has a cylindrical portion, or a portion that can be likened thereto, in order to be able to apply the collar 10.

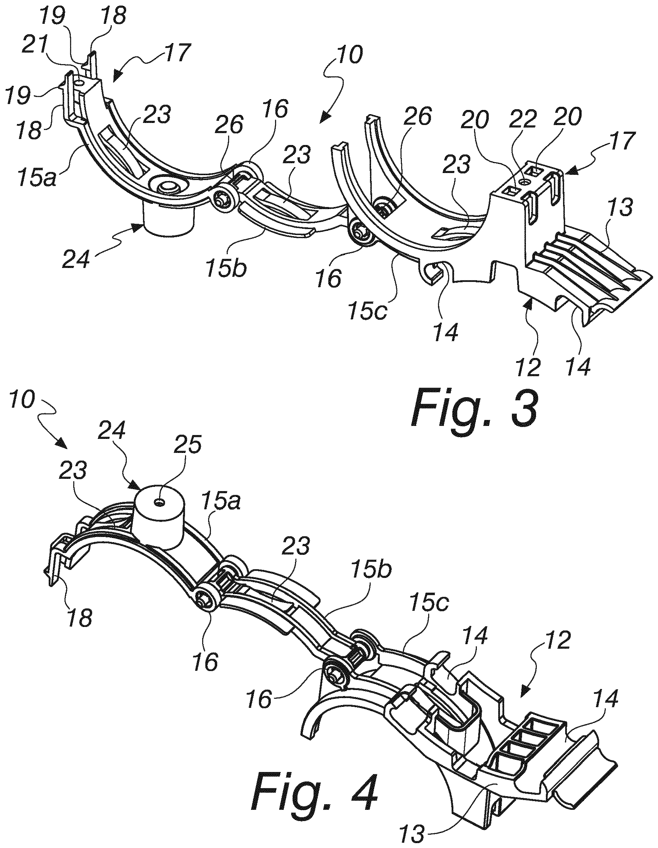

The fixing means 12 can be of a known type or of the illustrated type, or comprising a lateral protrusion 13 on which there are, on its lower part with respect to Figure 3, seats 14 for snap-acting quick coupling with longitudinally extended elements of a supporting structure, which is not shown. The seats 14 for snap-acting quick coupling are defined by elastically deformable tabs, which during engagement close onto the longitudinally elongated element.

The collar 10 comprises three arc-like portions in series, designated respectively by the reference numerals 15a for the first one, 15b for the intermediate one, and 15c for the last one.

The arc-like portions are associated in series by means of two hinges 16, one interposed between the first arc-like portion 15a and the intermediate arc-like portion 15b, the other one between the latter and the last arc-like portion, to allow their relative rotation. As is evident, the first arc-like portion 15a and the last arc-like portion 15c have a free end by means of which they are arranged during the closure of the collar 10.

The two hinges 16 are, with respect to each other, in such a position as to be not diametrically opposite. Each one of the arc-like portions is in fact comparable in length to a circular arc with an apex angle of less than 180°.

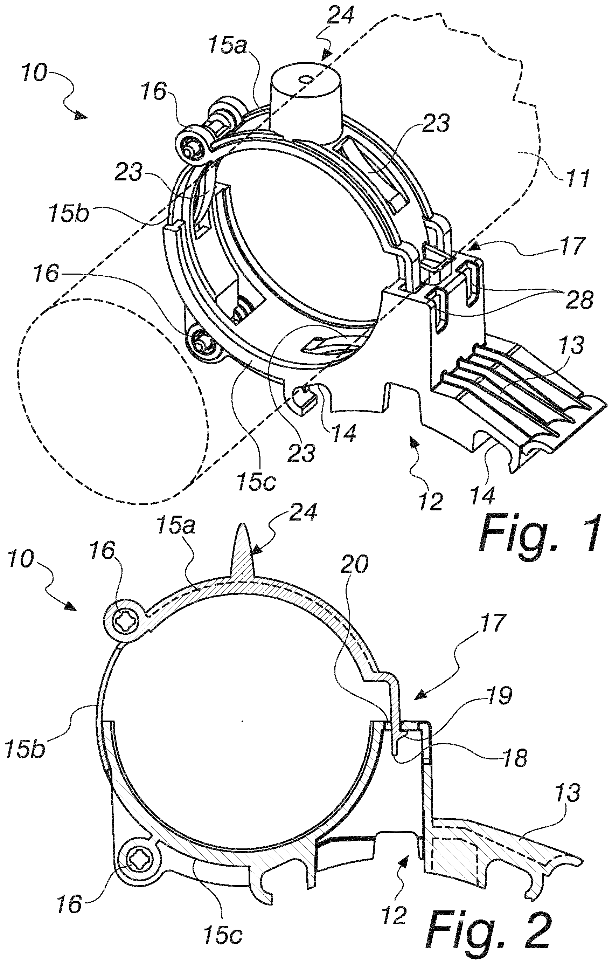

The three arc-like portions 15a, 15b and 15c close in a band-like arrangement onto the element to be fixed 11, as shown in Figure 1, advantageously by way of snap-acting quick-closure means 17, shown more clearly in Figure 3.

As shown, the snap-acting quick-closure means 17 are arranged at the ends of the first arc-like portion 15a and of the last arc-like portion 15c.

In particular, they comprise two elastic tabs 18, at the end of the first arc-like portion 15a, which protrude with a direction that is substantially tangent to its curvature and are both provided with a tooth 19 for snap connection to the last arc-like portion 15c, which instead has, at its end, at least two corresponding undercut insertion seats 20 for the two tabs 18, which are elastically deformable.

Conveniently, the last arc-like portion 15c has, as its end, also two access openings 28 for the disengagement of the teeth 19, for example by means of a screwdriver.

The manner in which closure occurs is clearly visible in Figure 2, which is a sectional view of the collar 10 in a closed condition, at a plane that is parallel to the central plane.

Figures 1 and 3 further show that the first arc-like portion 15a and the last arc-like portion 15c can be crossed, at their ends to be associated in order to close the collar 10, by at least one bolt, or optionally other mechanical connection means, to be screwed into two corresponding holes 21 and 22, arranged respectively between the two tabs 18 of the first arc-like portion 15a and between the two insertion seats 20 of the last arc-like portion 15c.

The three arc-like portions 15a, 15b and 15c are all advantageously provided with elastic elements 23 for compensating the dimensional tolerances of the diameter of the element to be fixed 11.

Each one of said elements is substantially arc-shaped, protrudes from the surface of the arc-like portion to which it belongs, 15a, 15b or 15c, and has a concavity that is opposite thereto.

In particular, such elements consist substantially of a curved and cantilevered tab, with one free end and one end coupled to the same arc-like portion 15a, 15b or 15c, and are provided at the central cross-section of the collar 10.

The collar 10 advantageously comprises means 24 for connecting additional elements of an apparatus or a system to be rendered integral with the element to be fixed 11.

In the illustrated example, the connecting means 24 consist of a cylindrical spacer that protrudes from the outer side of the first arc-like portion 15a and is provided axially with a connecting hole 25, by means of which an optional element to be rendered integral is connected by means of a screw or the like.

The collar 10 is formed in one piece and in an open configuration by means of a known molding process which provides for the movement of some internal parts of the closed mold, in this case for the interpenetration of parts to be hinged.

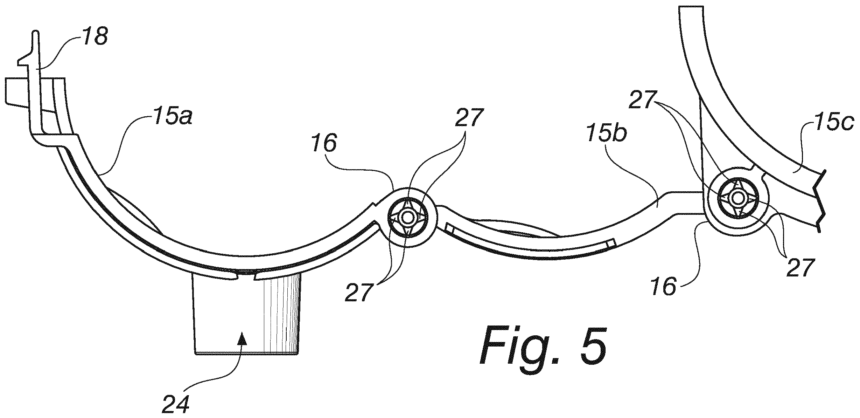

At the end of the molding process, the collar 10 is open, as shown in Figures 3 and 4, and the arc-like portions 15a, 15b and 15c are in series and fixed with respect each other. This is due to the fact that at the end of the molding process each one of the hinges 16 has connecting bridges 26, which have, at each end, four radial spikes 27, which prevent the relative rotation of the arc-like portions and constitute yielding parts that are sized to resist enough to keep the part open in a rigid manner and at the same time are intended to break with the first closure of the collar. The four spikes 27 can be seen more clearly in the enlarged-scale view of Figure 5.

Use of the collar according to the invention is as follows.

As just explained, at the end of the molding process the collar 10 is in one piece, open and with arc-like portions 15a, 15b and 15c in series and rigidly connected.

Upon the first closure of the collar 10, the four spikes 27, which cause the stiffness, are broken, allowing the relative rotation of the parts.

The collar 10 is fixed to the supporting structure with the lateral protrusion 13 by way of the fixing means 12, initially rendering only the last arc-like portion 15c integral with the supporting structure. The element to be fixed 11 (if it is cylindrical, or a cylindrical portion thereof) is rested in the curvature of the latter and the collar 10 is closed in a band-like arrangement around it, inserting the two tabs 18 with the respective teeth 19 in the corresponding insertion seats 20.

Optionally, for the sake of greater safety, it is possible to screw a bolt in the holes 21 and 22.

At the end of the fixing of the element to be fixed 11 to the supporting structure, it is optionally possible to render integral therewith any additional element of the same apparatus or device by way of the adapted connection means 24 described above.

The teeth 19 create the engagement with the last arc-like portion 15c, and in order to reopen the collar 10 it is sufficient to disengage them by pushing them with a screwdriver that can be inserted in the adapted access openings 28.

It should be noted that the presence of the curved and cantilevered tabs of the elastic compensation elements 23 allows to compensate for any dimensional tolerances of the diameter of the tank, or in general of the cylindrical portion of the element to be fixed 11, by compressing as necessary against the walls of said element during the use of the collar 10.

Moreover, the tabs allow to keep the element to be fixed 11 in a centered position with respect to the collar 10 and therefore in the provided position of the apparatus, the collar 10 being in turn fixed to the supporting structure.

It should also be noted that since each one of the arc-like portions has a length that is comparable to a circular arc with an apex angle of less than 180°, it is necessary to use a minimum of three arc-like portions and two hinges 16, preventing said hinges from falling into a diametrically opposite position with respect to the tank and consequently reducing the diametrical space occupation with respect to the collars currently in use.

Moreover, it should be noted that the combination of the hinges 16 and of the snap-acting quick-closure means 17 facilitates the movements of the operator, who needs to keep still fewer parts simultaneously than what occurs with known collars.

In practice it has been found that the invention achieves the intended aim and objects, by providing a collar 10 that is adapted to facilitate and speed up the operations for fixing tanks, pipes and elements with cylindrical portions in general and capable of adapting to the dimensions of said elements, compensating for any dimensional tolerances of the diameter thereof.

Moreover, the collar can be closed optionally without using mechanical connection means, such as bolts, and once it has been assembled it allows to reduce the overall diametrical space occupation.

Another advantage of the invention is that it can be manufactured in one piece according to currently known technologies.

The invention thus conceived is susceptible of numerous modifications and variations, all of which are within the scope of the appended claims; all the details may further be replaced with other technically equivalent elements.

In practice, the materials used, so long as they are compatible with the specific use, as well as the contingent shapes and dimensions, may be any according to requirements and to the state of the art.

The disclosures in Italian Patent Application No. PD2012A000298 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A fixing collar (10) for pipes, tanks and bodies with cylindrical portions in general, of the type of a band that wraps around the element to be fixed (11) to a supporting structure by way of fixing means (12), comprising at least three arc-like portions (15a, 15b, 15c) in series, associated by means of at least two hinges (16) in positions that are not diametrically mutually opposite and close so as to surround said element (11) to be fixed by way of snap-acting quick-closure means (17) arranged at the ends of the first arc-like portion (15a) and of the last arc-like portion (15c) of said at least three arc-like portions (15a, 15b, 15c) in series, which are further provided with elastic elements (23) for compensating dimensional tolerances of the diameter of said element to be fixed (11).

2. The collar according to claim 1, **characterized in that** said snap-acting quick-closure means (17) comprise at least one elastic tab (18) that is arranged at the end of said first arc-like portion (15a) and is provided with a tooth (19) that protrudes from it for snap-acting connection to said last arc-like portion (15c), which has at its end at least one corresponding insertion seat (20) for said tab (18).

3. The collar according to claim 2, **characterized in that** said last arc-like portion (15c) has, at its end, at least one access opening (28) for the disengagement of each one of said teeth (19).

4. The collar according to claim 1, **characterized in that** said elastic compensation elements (23) are substantially arc-shaped, protruding from the surface of said arc-like portion (15a, 15b, 15c) and having a concavity that is opposite with respect to the latter.

5. The collar according to claim 4, **characterized in that** each one of said arc-shaped elastic compensation elements (23) consists substantially of a curved and cantilevered tab with a free end and an end coupled to said arc-like portion (15a, 15b, 15c).

6. The collar according to claim 2, **characterized in that** each one of said first arc-like portion (15a) and said last arc-like portion (15c) can be crossed, at their ends to be associated to close said collar (10), by at least one bolt, or other mechanical connection means, to be screwed into two corresponding holes (21, 22) arranged respectively between two of said tabs (18) and two of said insertion seats (20).

7. The collar according to claim 1, **characterized in that** it comprises means (24) for the connection of additional elements of an apparatus or system, to be rendered integral with said element to be fixed (11).

8. The collar according to claim 1, **characterized in that** said fixing means (12) comprise a lateral protrusion (13) on which seats (14) are provided for snap-acting quick engagement with longitudinally extended elements of a supporting structure.

9. The collar according to claim 1, **characterized in that** it is provided in one piece and in an open configuration, with connecting bridges (26), at each one of said hinges (16), which have, at each end, four radial spikes (27) for preventing the corresponding rotation of said arc-like portions (15a, 15b, 15c) and are intended to be broken during the first closure of said collar (10).

## Patentansprüche

1. Eine Befestigungsmanschette (10) für Leitungen, Tanks und Körper mit zylinderförmigen Abschnitten im Allgemeinen, vom Typ eines Rings, der das Element, das durch Befestigungsmittel (12) an einer tragenden Struktur befestigt werden soll, umgibt; mindestens drei seriell angeordnete bogenförmige Abschnitte (15a, 15b, 15c) umfassend, verbunden durch mindestens zwei Scharniere (16) in Positionen, die einander nicht diametral gegenüberliegen und sich schließen, um das zu befestigende Element (11) durch Schnellverschlussmittel (17) mit Schnappwirkung zu umgeben, die an den Enden des ersten bogenförmigen Abschnitts (15a) und des letzten bogenförmigen Abschnitts (15c) der mindestens drei seriell angeordneten bogenförmigen Abschnitte (15a, 15b, 15c) angebracht sind, die weiter mit elastischen Elementen (23) zum Ausgleichen von Maßtoleranzen des Durchmessers des zu befestigenden Elements (11) ausgestattet sind.

2. Die Manschette gemäß Anspruch 1, **dadurch gekennzeichnet, dass** die Schnellverschlussmittel (17) mit Schnappwirkung mindestens eine elastische Nase (18) umfassen, die am Ende des ersten bogenförmigen Abschnitts (15a) angebracht und mit einem Zahn (19) versehen ist, der zur Schnappverbindung mit dem letzten bogenförmigen Abschnitt (15c) aus ihm herausragt, welcher an seinem Ende mindestens einen entsprechenden Einführsitz (20) für die Nase (18) hat.

3. Die Manschette gemäß Anspruch 2, **dadurch gekennzeichnet, dass** der letzte bogenförmige Abschnitt (15c) an seinem Ende mindestens eine Zugangsöffnung (28) zum Lösen jedes der Zähne (19) hat.

4. Die Manschette gemäß Anspruch 1, **dadurch gekennzeichnet, dass** die elastischen Ausgleichselemente (23) im Wesentlichen bogenförmig sind, aus der Oberfläche des bogenförmigen Abschnitts (15a, 15b, 15c) herausragen und eine Konkavität haben, die Letzterem gegenüberliegt.

5. Die Manschette gemäß Anspruch 4, **dadurch gekennzeichnet, dass** jedes der bogenförmigen elastischen Ausgleichselemente (23) im Wesentlichen aus einer gekrümmten und einseitig eingespannten Nase mit einem freien Ende und einem Ende besteht, das mit dem bogenförmigen Abschnitt (15a, 15b, 15c) gekoppelt ist.

6. Die Manschette gemäß Anspruch 2, **dadurch gekennzeichnet, dass** sowohl der erste bogenförmige Abschnitt (15a) als auch der letzte bogenförmige Abschnitt (15c) an ihren Enden, die zum Schließen der Manschette (10) verbunden werden sollen, von mindestens einem Bolzen oder anderem mechanischen Verbindungsmittel durchquert werden können, das in zwei entsprechende Bohrungen (21, 22) einzuschrauben ist, die zwischen zwei der Nasen (18) beziehungsweise zwei der Einführsitze (20) angebracht sind.

7. Die Manschette gemäß Anspruch 1, **dadurch gekennzeichnet, dass** sie Mittel (24) für die Verbindung zusätzlicher Elemente einer Vorrichtung oder eines Systems, die/das integral mit dem zu befestigenden Element (11) zu machen ist, umfasst.

8. Die Manschette gemäß Anspruch 1, **dadurch gekennzeichnet, dass** die Befestigungsmittel (12) einen seitlichen Vorsprung (13) umfassen, in dem Sitze (14) für eine Schnellverbindung mit Schnappverschluss mit sich in Längsrichtung erstreckenden Elementen einer tragenden Struktur angebracht sind.

9. Die Manschette gemäß Anspruch 1, **dadurch gekennzeichnet, dass** sie einteilig und in einer offenen Konfiguration hergestellt ist, mit Verbindungsbrücken (26) an jedem der Scharniere (16), die an jedem Ende vier radiale Dornen (27) haben, um die entsprechende Drehung der bogenförmigen Abschnitte (15a, 15b, 15c) zu verhindern, und dazu bestimmt sind, während des ersten Schließens der Manschette (10) zerbrochen zu werden.

## Revendications

1. Collier de fixation (10) pour des tuyaux, des réservoirs et des corps ayant des parties cylindriques en général, du type d'une bande qui enveloppe l'élément (11) devant être fixé à une structure de support au moyen de moyens de fixation (12), comportant au moins trois parties analogues à des arcs (15a, 15b, 15c) en série, associées au moyen d'au moins deux charnières (16) dans des positions qui ne sont pas diamétralement mutuellement opposées et proches de manière à entourer ledit élément (11) à fixer au moyen de moyens de fermeture rapide par encliquetage (17) agencés aux extrémités de la première partie analogue à un arc (15a) et de la dernière partie analogue à un arc (15c) desdites au moins trois parties analogues à des arcs (15a, 15b, 15c) en série, qui sont en outre pourvus d'éléments élastiques (23) pour compenser des tolérances dimensionnelles du diamètre dudit élément à fixer (11).

2. Collier selon la revendication 1, **caractérisé en ce que** lesdits moyens de fermeture rapide par encliquetage (17) comportent au moins un ergot élastique (18) qui est agencé à l'extrémité de ladite première partie analogue à un arc (15a) et est pourvu d'une dent (19) qui fait saillie à partir de lui pour une liaison par encliquetage avec ladite dernière partie analogue à un arc (15c) qui a, à son extrémité, au moins un logement d'insertion (20) correspondant pour ledit ergot (18).

3. Collier selon la revendication 2, **caractérisé en ce que** ladite dernière partie analogue à un arc (15c) a, à son extrémité, au moins une ouverture d'accès (28) pour la libération de chacune desdites dents (19).

4. Collier selon la revendication 1, **caractérisé en ce que** lesdits éléments de compensation élastiques (23) sont sensiblement en forme d'arc, faisant saillie à partir de la surface de ladite partie analogue à un arc (15a, 15b, 15c) et ayant une concavité qui est opposée par rapport à cette dernière.

5. Collier selon la revendication 4, **caractérisé en ce que** chacun desdits éléments de compensation élastiques en forme d'arc (23) est sensiblement constitué d'une languette incurvée et en porte-à-faux avec une extrémité libre et une extrémité couplée à ladite partie analogue à un arc (15a, 15b, 15c).

6. Collier selon la revendication 2, **caractérisé en ce que** chaque partie parmi ladite première partie analogue à un arc (15a) et ladite dernière partie analogue à un arc (15c) peut être croisée, au niveau de leurs extrémités à associer pour fermer ledit collier (10), par au moins un boulon, ou d'autres moyens de liaison mécaniques, à visser dans des trous (21, 22) correspondants agencés respectivement entre deux desdits ergots (18) et deux desdits logements d'insertion (20).

7. Collier selon la revendication 1, **caractérisé en ce qu'**il comporte des moyens (24) pour le raccordement d'éléments supplémentaires d'un appareil ou système, à solidariser avec ledit élément à fixer (11).

8. Collier selon la revendication 1, **caractérisé en ce que** lesdits moyens de fixation (12) comportent une saillie latérale (13) sur laquelle des logements (14) sont prévus pour une prise rapide par encliquetage avec des éléments s'étendant longitudinalement d'une structure de support.

9. Collier selon la revendication 1, **caractérisé en ce qu'**il est agencé d'un seul tenant et dans une configuration ouverte, avec des ponts de liaison (26), sur chacune desdites charnières (16), qui ont, à chaque extrémité, quatre pics radiaux (27) pour empêcher la rotation correspondante desdites parties analogues à des arcs (15a, 15b, 15c) et sont destinés à être cassés pendant la première fermeture dudit collier (10).
